# EUROPEAN PATENT APPLICATION

(11) **EP 4 614 253 A1**
(43) Date of publication of application: **10.09.2025**
(21) Application number: 23884842.8
(22) Date of filing: 30.10.2023
(51) Int. Cl.: G05B 19/418, B25J 9/16

(54) **CONTROL METHOD AND APPARATUS FOR AUTOMATION PROCESS, ELECTRONIC DEVICE, AND STORAGE MEDIUM**

(30) Priority: 04.11.2022 CN 202211376226
(71) Applicant: Megarobo Technologies Co., Ltd., Beijing 102200 (CN)
(72) Inventor: SONG, Mengqi, Beijing 102200 (CN)
(74) Representative: Hofmann, Matthias
(86) International application number: PCT/CN2023/127764
(87) International publication number: WO 2024/093912

(57) **Abstract**

Provided are a control method and apparatus for an automation process, an electronic device, and a storage medium. The control method for the automation process comprises: acquiring a task operation instruction in the automation process (S110); performing task deduction on a corresponding task operation according to parameters in the task operation instruction to obtain a task deduction result, wherein the task deduction result comprises execution parameters of a plurality of atomic operations in the task operation (S120); and according to the task deduction result, determining whether to execute the task operation (S130). According to the control method for the automation process, before the task operation instruction is executed, task deduction can be performed on the task operation instruction firstly, the task operation is then executed according to the task deduction result, and a complex task operation is split into a plurality of simple atomic operations according to the task deduction, such that the automation process is clearer.

## Description

The present application claims the priority to Chinese Patent Application No. 202211376226.2, titled "CONTROL METHOD AND APPARATUS FOR AUTOMATION PROCESS, ELECTRONIC DEVICE, AND STORAGE MEDIUM", filed on November 04, 2022 with the China National Intellectual Property Administration, which is incorporated herein by reference in its entirety.

### FIELD

The present disclosure relates to the field of automatic control, and in particular to a control method for an automatic process, a control apparatus for an automatic process, an electronic device, and a storage medium.

### BACKGROUND

At present, many technological fields gradually undergo automation transformation, to liberate manpower and improve efficiency. Automation systems are widely used in automated manufacturing, automated detection, automated test, or the like. Users can establish an automatic process as a whole with an interface provided by the automation system, and then control the operation of the automation system based on the automatic process.

However, as the scope of automation demand continues to expand, a large number of devices and steps will be involved in a set of automatic process. Furthermore, existing devices have many types and models, which may lead to completely different requirements for devices that realize the same function due to differences in types or models. Different requirements for devices may bring many restrictions to the configuration of the automatic process. If these restrictions are ignored during an actual automatic process, it may result in the automation process not being able to proceed smoothly or significant deviation in the execution result. For example, positions of a well plate penetrating different devices may be the same or different; and orientations of the well plate into the different devices may be the same or different. For a transfer operation during the automatic process, instructions received by a transporter may include a parameter related to a start position and a parameter related to a destination position. The foregoing two parameters for different devices are different. It may lead to the transporter grasping or placing the well plate in the wrong way, for example, placing the well plate to the corresponding device in the wrong orientation. This may not only lead to errors in an execution result of the transfer operation, but may also lead to collisions in transporters, resulting in a failure of the automation system.

Therefore, an improved solution is urgently required to solve the technical problems described above.

### SUMMARY

In view of the above problem, the present disclosure is provided. According to one aspect of the present disclosure, a control method for an automatic process is provided. The control method includes: obtaining a task operation instruction in the automatic process; performing a task inference on a task operation corresponding to the task operation instruction based on a parameter in the task operation instruction, to obtain a task inference result, where the task inference result includes execution parameters of multiple atomic operations in the task operation, and each atomic operation is executed by at least one execution device; and determining whether to perform the task operation based on the task inference result.

In an embodiment, the task operation instruction includes a transfer task operation instruction, and the transfer task operation instruction includes a parameter related to a start position of a transfer operation corresponding to the transfer task operation instruction and a parameter related to a destination position of the transfer operation corresponding to the transfer task operation instruction. The performing a task inference on a task operation corresponding to the task operation instruction based on a parameter in the task operation instruction to obtain a task inference result includes: obtaining, from the transfer task operation instruction, the parameter related to the start position and the parameter related to the destination position; determining whether a position adjustment is to be performed in a process of the transfer operation based on the parameter related to the start position and the parameter related to the destination position; in response to the position adjustment to be performed, determining a parameter related to the adjustment position based on the parameter related to the destination position, and determining the task inference result based on the parameter related to the start position, the parameter related to the destination position and the parameter related to the adjustment position; and in response to no position adjustment to be performed, determining the task inference result based on the parameter related to the start position and the parameter related to the destination position.

In an embodiment, the determining whether a position adjustment is to be performed in the process of the transfer operation based on the parameter related to the start position and the parameter related to the destination position includes: comparing the parameter related to the start position with the parameter related to the destination position; and determining whether the position adjustment is to be performed in the process of the transfer operation based on a comparative result between the parameter related to the start position and the parameter related to the destination position.

In an embodiment, in response to the position adjustment to be performed, determining a parameter related to the adjustment position based on the parameter related to the destination position includes: modifying the parameter related to the adjustment position based on the parameter related to the destination position, in a case that the parameter in the transfer task operation instruction includes the parameter related to the adjustment position; setting the parameter related to the adjustment position based on the parameter related to the destination position, in a case that the parameter in the transfer task operation instruction does not include the parameter related to the adjustment position; where the determining the task inference result based on the parameter related to the start position and the parameter related to the destination position, in response to no position adjustment to be performed includes: deleting the parameter related to the adjustment position, and determining the task inference result based on the parameter related to the start position and the parameter related to the destination position, in response to the parameter in the transfer task operation instruction including the parameter related to the adjustment position.

In an embodiment, the task operation instruction includes a transfer task operation instruction, and a parameter in the transfer task operation instruction includes any one or a combination of the following parameters: coordinate information on a start position of the transfer operation, coordinate information on a destination position of the transfer operation, a parameter of an operation during transporting in the transfer operation, a gripping height for a transfer object of the transfer operation, or a gripping orientation for the transfer object.

In an embodiment, the multiple atomic operations in the task operation includes any one or a combination of the followings: a movement of a robotic arm served as a transporter, a movement on a guide rail related to a transfer operation, a gripping operation of a gripping jaw of the robotic arm, a releasing operation of the gripping jaw of the robotic arm, a rotation operation of a rotary plate station related to the transfer operation, a code scanning operation of a code scanner related to the transfer operation, a lidding operation of a lid suction device related to the transfer operation, and a delidding operation of the lid suction device related to the transfer operation.

In an embodiment, a transporter for performing the transfer operation is a robotic arm, and the transfer task operation instruction includes a first picking parameter for a transfer object at the start position of the transfer operation and a second picking parameter for the transfer object at the destination position of the transfer operation, where in response to the first picking parameter different from the second picking parameter, performing the task operation based on the task inference result includes: picking the transfer object at the start position with the first picking parameter, and transferring the transfer object to the adjustment position; picking the transfer object again at the adjustment position with the second picking parameter, and transferring the transfer object to the destination position.

In an embodiment, the method further includes: performing the multiple atomic operations in series or in parallel in a process of the task operation.

According to another aspect of the present disclosure, a control apparatus for an automatic process is provided. The control apparatus includes: an instruction obtaining module, a task inference module and a determination module.

The instruction obtaining module is configured to obtain a task operation instruction in the automatic process.

The task inference module is configured to perform a task inference on a task operation corresponding to the task operation instruction based on a parameter in the task operation instruction, to obtain a task inference result, where the task inference result includes execution parameters of multiple atomic operations in the task operation, and each atomic operation is executed by at least one execution device.

The determination module is configured to determine whether to perform the task operation based on the task inference result.

According to another aspect of the present disclosure, an electronic device is provided. The electronic device includes a processor and a memory, where the memory stores computer program instructions, and the computer program instructions, when executed by the processor, implement the control method for the automatic process described above.

According to another aspect of the present disclosure, a storage medium is provided, where the storage medium stores program instructions, and the program instructions, when executed, implements the control method for the automatic process described above.

Based on the technical solution described above, a task inference may be performed on the task operation before the task operation instruction is executed, and whether to perform the task operation is determined based on the task inference result. The task inference result includes execution parameters of multiple atomic operations. In other words, in the technical solution described above, a complex task operation is divided into multiple simple atomic operations through task inference, thereby obtaining clear steps of the automatic process. Meanwhile, a smooth execution of the task operation is ensured. The task operation that cannot be executed normally due to a diversity of related parameters of the task operation required by the devices, such as the transfer task operation, is avoided. Furthermore, an accuracy of the execution result of the task operation is ensured, thereby guaranteeing the accuracy of the execution result of the subsequent operation of the task operation during the automatic process.

The above description is merely an overview of the technical solution of the present disclosure. In order to better understand the technical schemes of the present disclosure, the present disclosure can be implemented in accordance with the contents of the specification. And in order to make the above and other objects, features, and advantages of the present disclosure to be understood more clearly, specific embodiments of the present disclosure are referred as below.

### BRIEF DESCRIPTION OF THE DRAWINGS

Above and other objects, features, and advantages of the present disclosure will become more apparent with reference to the detailed description of the embodiments of the present disclosure made in conjunction with the drawings. The drawings are intended to provide further understanding of the embodiments of the present disclosure, and constitute a part of the specification. The drawings are intended to describe the present disclosure in conjunction with the embodiments of the present disclosure, and do not limit the present disclosure. In the drawings, same reference numerals generally represent same parts or steps.
FIG. 1 is a schematic flowchart of a control method for an automatic process according to an embodiment of the present disclosure;
FIG. 2 is a schematic diagram of a well plate according to an embodiment of the present disclosure;
FIG. 3 is a schematic flowchart illustrating a process of performing a task inference on a task operation based on a parameter in a task operation instruction to obtain a task inference result according to an embodiment of the present disclosure;
FIG. 4 is a schematic flowchart illustrating a process of determining whether a position adjustment is to be performed in a process of a transfer operation based on a parameter related to a start position and a parameter related to a destination position according to an embodiment of the present disclosure;
FIG. 5 is a schematic block diagram of a control apparatus for an automatic process according to an embodiment of the present disclosure; and
FIG. 6 is a schematic block diagram of an electronic device according to an embodiment of the present disclosure.

### DETAILED DESCRIPTION

Exemplary embodiments of the present disclosure are described in detail with reference to the drawings to make purposes, technical solutions, and advantages of the present disclosure more apparent. Apparently, the described embodiments are only a part of the embodiments instead of all embodiments of the present disclosure. It should be understood that, the present disclosure is not limited by the exemplary embodiments described herein. Based on the embodiments of the present disclosure described herein, all other embodiments obtained by those skilled in the art without creative efforts are deemed to fall into the scope of protection of the present disclosure.

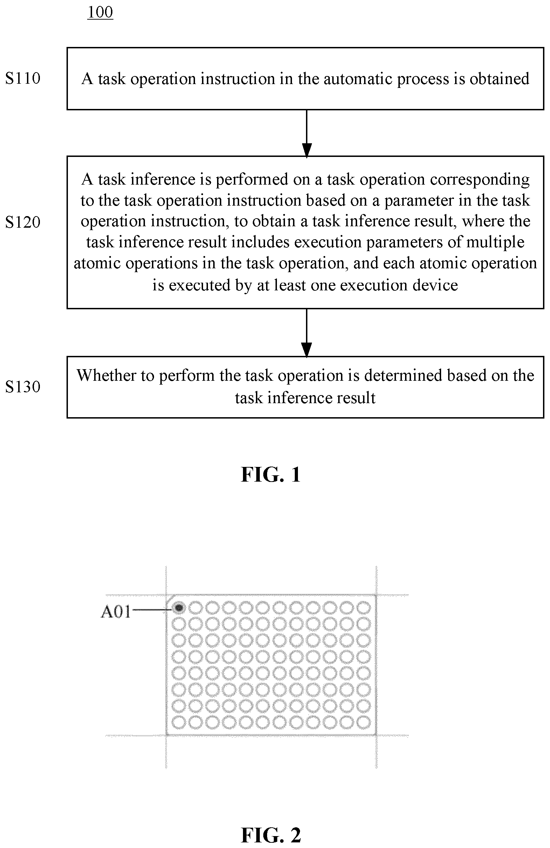

In order to solve the technical problems described above, a control method for an automatic process is provided according to the present disclosure. FIG. 1 is a schematic flowchart of a control method 100 for an automatic process according to an embodiment of the present disclosure. As shown in FIG. 1, the control method 100 includes the following steps of S110 to S130.

In step S110, a task operation instruction in the automatic process is obtained.

In an implementation, a host computer may provide a visual interface to the user. Based on the visual interface, the user may input the task operation instruction with an input device (such as a mouse or a keyboard) of the host computer. In an embodiment, the task operation instruction may be stored in a storage device of the host computer in advance, and may be directly obtained from the storage device of the host computer.

In step S120, a task inference is performed on a task operation corresponding to the task operation instruction based on a parameter in the task operation instruction, to obtain a task inference result, where the task inference result includes execution parameters of multiple atomic operations in the task operation, and each atomic operation is executed by at least one execution device.

In an implementation, after the task operation instruction is obtained in the above step S110, that is, when the task operation instruction is issued to the execution device, a driving device of the execution device may perform the task inference on the task operation based on the parameter in the task operation instruction. In short, the task inference may refer to a process of decomposing the task operation instruction into a series of atomic operations. The task operation instruction may include a transfer task operation instruction, a pipetting task operation instruction, or the like. For example, the parameter in the transfer task operation instruction may include any one or a combination of the following parameters: coordinate information on a start position of the transfer operation, coordinate information on a destination position of the transfer operation, a parameter of an operation during transporting in the transfer operation, a gripping height for a transfer object of the transfer operation, or a gripping orientation for the transfer object. For another example, the parameter in the pipetting task operation instruction may include: a device serial number for the pipetting operation, a pipetting amount for the pipetting operation, or the like. The following description is made by taking the transfer task operation instruction as an example. Operations corresponding to the transfer task operation instruction may include a transfer operation and other insertion operations, such as a code scanning operation, a lidding operation, and a delidding operation. It should be understood that the code scanning operation, the lidding operation, and the delidding operation may be regarded as operations performed during transporting in the transfer operation. In an embodiment, the start position of the transfer operation may be a device A. Thus, the coordinate information on the start position may be position coordinate information on the device A. Similarly, the destination position of the transfer operation may be a device B, and the coordinate information on the destination position may be position coordinate information on the device B. For example, the operation during transporting in the transfer operation is the code scanning operation. Correspondingly, the parameter of the operation during transporting in the transfer operation may include position coordinate information and angle information on the code scanner in the code scanning operation. It is assumed that the transfer object of the transfer operation is a well plate, and the execution device of the transfer operation is a robotic arm. FIG. 2 is a schematic diagram of a well plate according to an embodiment of the present disclosure. Referring to FIG. 2, A01 represents one well in the well plate. The gripping orientation for the transfer object may include: the robotic arm grasping the well plate from a narrow side away from the well A01, the robotic arm grasping the well plate from a wide side away from the hole A01, the robotic arm grasping the well plate from a narrow side near the well A01, and the robotic arm grasping the well plate from a wide side near the well A01. The gripping height for the transfer object may include: a minimum offset when the well plate is grasped from the narrow side, a maximum offset when the well plate is grasped from the narrow side, a minimum offset when the well plate is grasped from the wide side, and a maximum offset when the well plate is grasped from the wide side. In the technical solution described above, an accurate task inference result can be obtained based on the parameter in the transfer task operation instruction, and thus it is possible to accurately determine whether the task operation can be successfully executed.

The task inference may be performed on a current task operation instruction based on one or more of the parameters described above, to obtain the task inference result. The following description is also made by taking the transfer task operation instruction as an example. The multiple atomic operations in the task inference result may include performing a grasping operation on a transfer object at a start position of the transfer operation, performing a transfer operation on the transfer object from the start position to a position where a code scanner is arranged, performing a code scanning operation by the code scanner, performing a transfer operation on the transfer object from the position where the code scanner is arranged to a destination position of the transfer operation, and performing a releasing operation on the transfer object at the destination position. Each atomic operation is executed by at least one execution device. For example, the atomic operation of performing the grasping operation on the transfer object at the start position of the transfer operation may be executed by a robotic arm, specifically by a gripping jaw of the robotic arm. For another example, the atomic operation of performing the code scanning operation by the code scanner may be executed by two execution devices of the robotic arm and the code scanner in cooperation. Specifically, the gripping jaw of the robotic arm grips the transfer object, while the code scanner performs the code scanning operation on the transfer object.

In step S130, whether to perform the task operation is determined based on the task inference result.

For example, whether the multiple atomic operations in the task inference result can be successfully executed is determined based on the task inference result in the step S120 described above. In the case that the task inference result indicates that multiple atomic operations can be successfully executed, the corresponding task operation is determined to be executed. In the case that the task inference result indicates that multiple atomic operations cannot be successfully executed, the task operation is not executed.

Based on the technical solution described above, a task inference may be performed on the task operation before the task operation instruction is executed, and whether to perform the task operation is determined based on the task inference result. The task inference result includes execution parameters of multiple atomic operations. In other words, in the technical solution described above, a complex task operation is divided into multiple simple atomic operations through task inference, thereby obtaining clear steps of the automatic process. Meanwhile, a smooth execution of the task operation is ensured, and the task operation that cannot be executed normally due to a diversity of related parameters of the task operation required by the devices, such as a transfer task operation, is avoided. Furthermore, an accuracy of the execution result of the task operation is ensured, thereby guaranteeing the accuracy of the execution result of the subsequent operation of the task operation during the automatic process.

Exemplarily, the multiple atomic operations in the task operation may include any one or a combination of the following operations: a movement of a robotic arm served as a transporter, a movement on a guide rail related to a transfer operation, a gripping operation of a gripping jaw of the robotic arm, a releasing operation of the gripping jaw of the robotic arm, a rotation operation of a rotary plate station related to the transfer operation, a code scanning operation of a code scanner related to the transfer operation, a lidding operation of a lid suction device related to the transfer operation, and a delidding operation of the lid suction device related to the transfer operation.

In an embodiment, in the case that the task operation instruction is the transfer task operation instruction and the transporter is the robotic arm, the multiple atomic operations in the task inference result obtained by the task inference may include the movement of the robotic arm of the transporter. It should be understood that, in this embodiment, before the robotic arm moves, that is, before the robotic arm transfers the transfer object, the multiple atomic operations may further include the gripping operation of the gripping jaw of the robotic arm, that is, gripping the transfer object by the robotic arm. After the robotic arm moves, that is, after the robotic arm completes the transfer operation on the transfer object, the multiple atomic operations may further include the releasing operation of the gripping jaw of the robotic arm, that is, releasing the transfer object by the robotic arm. Alternatively, in the case that the task operation instruction is the transfer task operation instruction and the transporter is a guide rail, the atomic operations may not include the gripping operation and the releasing operation of the gripping jaw of the robotic arm. In this embodiment, the transfer object can be transfer only by the movement operation on the guide rail. It should be understood that when the transporter is the robotic arm, the transfer operation may also include the movement operation on the guide rail, that is, the movement on the guide rail may also use to transfer other transfer objects in the process of the robotic arm transferring the transfer object. In an embodiment, the multiple atomic operations may further include the rotation operation of the rotary plate station related to the transfer operation. For example, the transfer object related to the transfer operation is the well plate, and the well plate is arranged on the rotary plate station. Through the rotation operation of the rotary plate station, the robotic arm can grip the transfer object. Therefore, before the gripping operation of the gripping jaw of the robotic arm, the rotation operation of the rotary plate station may be involved. Alternatively, the multiple atomic operations may further include the code scanning operation of the code scanner. That is, the code scanning operation of the code scanner may be involved during transporting in the transfer operation, which has been described in detail above and is not repeated here for the sake of brevity. The multiple atomic operations may further include the lidding and the delidding operations. That is, the lidding operation and the delidding operation are involved during transporting in the transfer operation. The execution device of the lidding operation and the delidding operation may be a lid suction device.

In the technical solution described above, the task operation instruction may be decomposed into the multiple atomic operations. The multiple atomic operations described above are operations including the least number of execution device, which can decompose the task operation instruction to the greatest extent, so that a more accurate and reliable task inference result can be obtained.

In an implementation, the method 100 may further include: performing the multiple atomic operations in series or in parallel during execution of the task operation. In one embodiment, it is assumed that the task operation is a transfer operation of transferring the well plate from a device A to a device B and then to a device C. A delidding operation will be performed in the process of transferring the well plate from the device A to the device B. Therefore, the task inference result obtained by performing the task inference in response to the task operation instruction may include the multiple atomic operations as follows: a transfer operation 1 in which the robotic arm transfers the well plate from the device A to the device B, a transfer operation 2 in which the robotic arm transfers the well plate from the device B to the device C, and the delidding operation performed by the lid suction device. It should be understood that the execution devices of the transfer operation 1 and the transfer operation 2 may be the same robotic arm or different robotic arms. If the execution devices of the two transfer operations are the same robotic arm, the two transfer operations cannot be executed in parallel due to different parameters such as the two transfer operations having different start positions and different destination positions. That is, the two transfer operations are executed in serial. If the execution devices of the two transfer operations are different robotic arms, a safety accident such as a robotic arm collision may occur when the two robotic arms execute the transfer operations at the same time. Thus, the two transfer operations are preferable executed in series. In the delidding operation, the execution device of the delidding operation is the lid suction device. Apparently, the lid suction device and the robotic arm are different execution devices. Furthermore, safety accidents such as collisions will not occur when the lid suction device and the robotic arm perform specific operations. Thus, the delidding operation of the lid suction device and the transfer operation 1 may be executed in parallel, to save time and improve execution efficiency of the operation.

In the technical solution described above, the multiple atomic operations may be reasonably executed in series or in parallel, which depends on actual situations. In this way, the smooth execution of the task operation is ensured, and the execution efficiency of the task operation is improved.

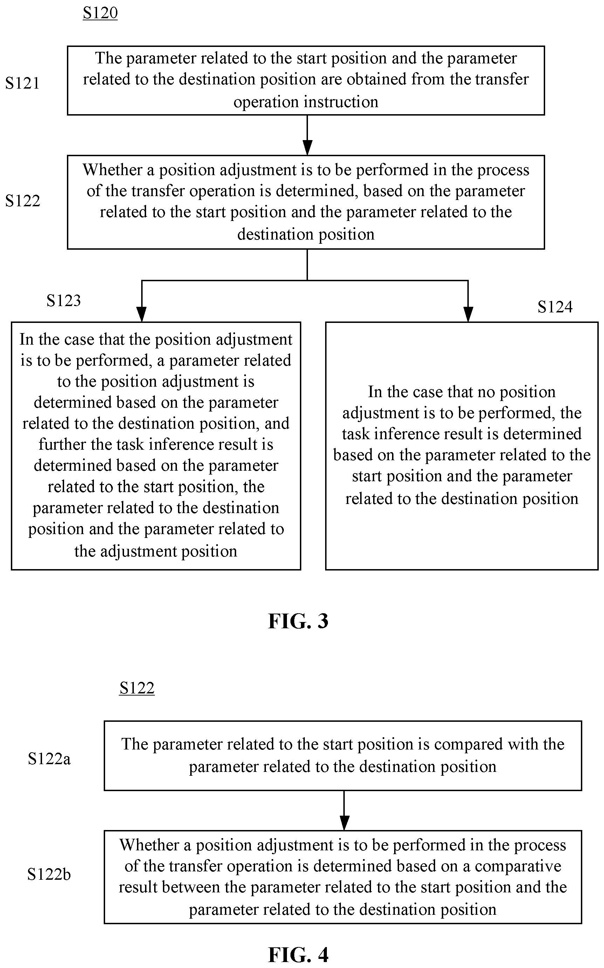

In an implementation, the task operation instruction includes a transfer task operation instruction. The transfer task operation instruction includes a parameter related to a start position of the transfer operation and a parameter related to a destination position of the transfer operation. The task inference result is obtained by performing a task inference on a corresponding task operation based on a parameter in the task operation instruction. FIG. 3 is a schematic flowchart illustrating a process of performing a task inference on a task operation corresponding to the task operation instruction based on a parameter in a task operation instruction to obtain a task inference result in step S120 according to an embodiment of the present disclosure. As shown in FIG. 3, the step S120 further includes steps of S121 to S124.

In step S121, the parameter related to the start position and the parameter related to the destination position are obtained from the transfer operation instruction.

It is assumed that the operation corresponding to the transfer operation instruction obtained in step S110 is the transfer operation of transferring the well plate from the device A to the device B, and the code scanning operation needs to be performed at the position of the code scanner A in the transfer process. Based on the transfer operation instruction, the parameter related to the start position may be obtained, for example, parameters such as the gripping height and gripping orientation of the robotic arm for gripping the well plate at the start position. The parameter related to the destination position can also be obtained, for example, parameters such as the gripping height and gripping orientation of the robotic arm for gripping the well plate at the destination position before the robotic arm releases the well plate.

In step S122, whether a position adjustment is to be performed in the process of the transfer operation is determined, based on the parameter related to the start position and the parameter related to the destination position.

In an implementation, whether the position adjustment is to be performed in the process of the transfer operation may be determined by comparing the parameter related to the start position with the parameter related to the destination position. In the case that the parameter related to the start position is the same as the parameter related to the destination position, it is determined that no position adjustment is to be performed in the process of the transfer operation. In the case that the parameter related to the start position is different from the parameter related to the destination position, it is determined that the position adjustment is to be performed. Alternatively, it is possible to determine whether a relationship between the parameter related to the start position and the parameter related to the destination position meets a specific condition, and further to determine whether the position adjustment is to be performed in the process of the transfer operation based on a determination result. The specific condition may be reasonably set based on experience, which will not be limited herein. In the case that the relationship between the parameter related to the start position and the parameter related to the destination position meets the specific condition, it is determined that no position adjustment is to be performed in the process of the transfer operation. In the case that the relationship between the parameter related to the start position and the parameter related to the destination position does not meet the specific condition, it is determined that the position adjustment is to be performed.

In step S123, in the case that the position adjustment is to be performed, a parameter related to the position adjustment is determined based on the parameter related to the destination position, and further the task inference result is determined based on the parameter related to the start position, the parameter related to the destination position and the parameter related to the adjustment position.

In an implementation, if the position adjustment is determined to be performed in the process of the transfer operation based on the step S122 described above, the parameter related to the adjustment position may be set as the parameter related to the destination position. That is, the parameter related to the adjustment position is the same as the parameter related to the destination position. Therefore, the task inference may be performed on the task operation instruction based on the parameter related to the start position, the parameter related to the adjustment position and the parameter related to the destination position, such as the gripping height and the gripping orientation of the robotic arm for the transfer object, to determine the task inference result.

In step S124, the task inference result is determined based on the parameter related to the start position and the parameter related to the destination position, in the case that no position adjustment is to be performed.

In an implementation, in the case that it is determined that no position adjustment is to be performed in the process of the transfer operation based on the step S122 described above, the task inference may be performed on the task operation instruction based on the parameter related to the start position and the parameter related to the destination position, such as the gripping height and the gripping orientation of the robotic arm for the transfer object, to determine the task inference result.

It should be understood that step S123 and step S124 merely represent two different results in the task inference process, which do not limit the order of execution sequences in the task inference process.

In the above technical solution, it is determined whether the position adjustment is to be performed based on the parameters related to the start position and the destination position of the transfer operation corresponding to the transfer task operation instruction, so as to obtain the task inference result. Setting the adjustment position enables the corresponding transfer operation in the transfer task operation instruction to be executed smoothly. This can avoid deviations during execution of the task operation instruction which may result in the corresponding task operation being unable to be executed successfully.

In an implementation, FIG. 4 is a schematic flowchart illustrating a process of determining whether a position adjustment is to be performed in a process of a transfer operation based on a parameter related to a start position and a parameter related to a destination position in step S122 according to an embodiment of the present disclosure. As shown in FIG. 4, the step S122 further includes the following steps of S122a and S122b.

In step S122a, the parameter related to the start position is compared with the parameter related to the destination position.

In an implementation, after the parameter related to the start position and the parameter related to the destination position in the transfer operation instruction are obtained based on step S121, a one-to-one comparison may be performed on the parameters based on the type of the parameter. Specifically, the parameter related to the start position may include the gripping height and gripping orientation of the robotic arm for gripping the well plate at the start position. The parameter related to the destination position may include the gripping height and gripping orientation of the robotic arm for gripping the well plate at the destination position before the robotic arm releases the well plate. The gripping height of the robotic arm for gripping the well plate at the start position may be compared with the gripping height of the robotic arm for gripping the well plate at the destination position before the robotic arm releases the well plate. Alternatively, the gripping orientation of the robotic arm for gripping the well plate at the start position may be compared with the gripping orientation of the robotic arm for gripping the well plate at the destination position before the robotic arm releases the well plate.

In step S122b, whether a position adjustment is to be performed in the process of the transfer operation is determined based on a comparative result between the parameter related to the start position and the parameter related to the destination position.

Based on the step S122a described above, in the case that the gripping height of the robotic arm for gripping the well plate at the start position is the same as the gripping height of the robotic arm for gripping the well plate at the destination position before the robotic arm releases the well plate, and that the gripping orientation of the robotic arm for gripping the well plate at the start position is the same as the gripping orientation of the robotic arm for gripping the well plate at the destination position before the robotic arm releases the well plate, the parameter related to the start position and the parameter related to the destination position are regarded as the same, otherwise they are regarded as different. In the case that the parameter related to the start position is the same as the parameter related to the destination position, it is determined that no position adjustment is to be performed in the process of the transfer operation. In the case that the parameter related to the start position is different from the parameter related to the destination position, it is determined that the position adjustment is to be performed in the process of the transfer operation.

In the technical solution described above, whether the position adjustment is to be performed in the process the transfer operation may be determined by comparing the parameter related to the start position with the parameter related to the destination position. This determination method is simple and easy, and it is not easy to make mistakes. Thus, the accuracy of the task inference result is ensured. Furthermore, it is ensured that the task operation is able to be executed accurately and successfully when the task inference result determines that the task operation can be executed.

In an implementation, in the case that the position adjustment is to be performed in step 123, determining a parameter related to the adjustment position based on the parameter related to the destination position includes: modifying the parameter related to the adjustment position based on the parameter related to the destination position in the case that a parameter in the transfer task operation instruction includes the parameter related to the adjustment position; and setting the parameter related to the adjustment position based on the parameter related to the destination position in the case that the parameter in the transfer task operation instruction does not include the parameter related to the adjustment position.

In an embodiment, the parameter in the transfer task operation instruction may include the parameter related to the adjustment position. In this case, the parameter related to the adjustment position may be modified based on the parameter related to the destination position. For example, the parameter related to the destination position includes the gripping height of the robotic arm for gripping the well plate being at half of the well plate; while the parameter related to the adjustment position in the transfer task operation instruction includes the gripping height of the robotic arm for gripping the well plate being at one-third of the top of well plate. In this condition, the gripping height of the robotic arm for gripping the well plate in the parameter related to the adjustment position may be modified as gripping the well plate at one-half of the well plate. It should be understood that the above parameters are merely exemplary, and if other parameters are included in the parameters related to the destination position and the adjustment position, the parameter related to the adjustment position may be modified in the similar manner. In short, the modified parameter related to the adjustment position is the same as the parameter related to the destination position.

Alternatively, in the case that the parameter in the transfer task operation instruction does not include the parameter related to the adjustment position, if the position adjustment is to be performed, the parameter related to the adjustment position may be set based on the parameter related to the destination position. That is, the parameter related to the adjustment position may be created. It should be understood that the set parameter related to the adjustment position is the same as the parameter related to the destination position.

In an implementation, in the case that no position adjustment is to be performed in step 124, the task inference result is determined based on the parameter related to the start position and the parameter related to the destination position, by deleting the parameter related to the adjustment position, and determining the task inference result based on the parameter related to the start position and the parameter related to the destination position, in the case that the parameter in the transfer task operation instruction includes the parameter related to the adjustment position.

The parameter in the transfer task operation instruction includes the parameter related to the adjustment position, while no position adjustment is to be performed in one embodiment. Then, it is understandable that the parameter related to the adjustment position is redundant. Thus, the parameter related to the adjustment position may be deleted. Then, the task inference result is determined based on the parameter related to the start position and the parameter related to the destination position. The inference process has been described in detail above, which will not be repeated herein.

In the above technical solution, the parameter related to the adjustment position may be flexibly set, modified or deleted, depending on whether or not the parameter related to the adjustment position is included in the transfer task operation instruction. Accordingly, the optimization of the obtained task inference result is guaranteed in different cases. Furthermore, the smooth execution of the task inference is ensured, thereby avoiding deviations in the execution process of the task operation.

In an implementation, the transporter for performing the transfer operation may be a robotic arm. The transfer task operation instruction includes a first picking parameter for a transfer object at a start position of the transfer operation and a second picking parameter for the transfer object at a destination position of the transfer operation. In the case that the first picking parameter is different from the second picking parameter, the task operation is performed based on the task inference result, by picking the transfer object at the start position with the first picking parameter, and transferring the transfer object to the adjustment position; picking the transfer object again at the adjustment position with the second picking parameter, and transferring the transfer object to the destination position.

Specifically, the transfer task operation instruction may include the first picking parameter for the transfer object at the start position of the transfer operation and the second picking parameter for the transfer object at the destination position of the transfer operation. The first picking parameter may include the gripping height and gripping orientation of the robotic arm for the transfer object at the start position. The second picking parameter may include the gripping height and gripping orientation of the robotic arm for the transfer object at the destination position. It is determined that the first picking parameter and the second picking parameter are different by comparing the first picking parameter with the second picking parameter. For example, in the first picking parameter, the gripping height of the robotic arm for the transfer object is at half of the well plate; and in the second picking parameter, the gripping height of the robotic arm for the transfer object is one-third of the top of well plate. Further, the corresponding transfer operation may be performed based on the following task inference result. Specifically, the robotic arm may grip the transfer object with the first picking parameter at the start position, and transfer the transfer object to the adjustment position. Then, the robotic arm grips the transfer object again with the second picking parameter at the adjustment position. Finally, the robotic arm transfers the transfer object to the destination position.

In the above technical solution, the first picking parameter is different from the second picking parameter, and the second picking parameter is a picking parameter of the transfer operation for the transfer object at the destination position. Therefore, by adjusting the transfer parameter for the transfer object at the adjustment position to the second picking parameter, it is possible to ensure that the transfer task operation can be successfully executed. That is, it is possible to accurately transfer the transfer object to the destination position. Furthermore, the solution described above is simple and easy to be implemented.

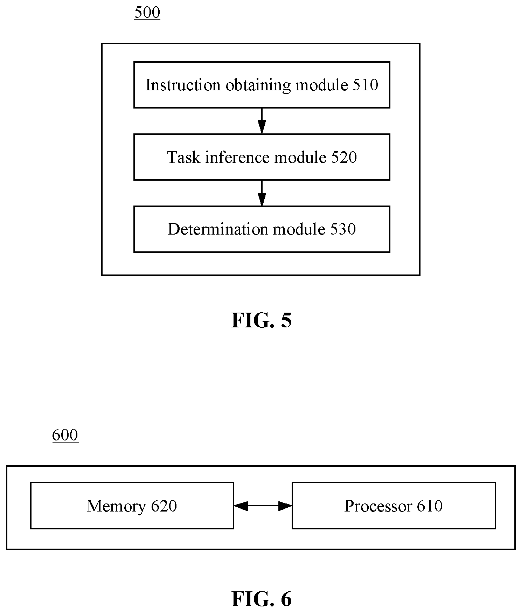

According to another aspect of the present disclosure, a control apparatus for an automatic process is provided. FIG. 5 is a schematic block diagram of a control apparatus 500 for an automatic process according to an embodiment of the present disclosure. As shown in FIG. 5, the apparatus 500 includes an instruction obtaining module 510, a task inference module 520, and a determination module 530.

The instruction obtaining module 510 is configured to obtain a task operation instruction during the automatic process.

The task inference module 520 is configured to perform a task inference on a task operation corresponding to the task operation instruction based on a parameter in the task operation instruction, to obtain a task inference result, where the task inference result includes execution parameters of multiple atomic operations in the task operation, and each atomic operation is executed by at least one execution device.

The determination module 530 is configured to determine whether to perform the task operation based on the task inference result.

In an implementation, the task inference module 520 may specifically be configured to obtain, from the transfer task operation instruction, the parameter related to the start position and the parameter related to the destination position; determine whether a position adjustment is to be performed in a process of the transfer operation based on the parameter related to the start position and the parameter related to the destination position; in response to the position adjustment to be performed, determine a parameter related to the adjustment position based on the parameter related to the destination position, and determine the task inference result based on the parameter related to the start position, the parameter related to the destination position and the parameter related to the adjustment position; and determine the task inference result based on the parameter related to the start position and the parameter related to the destination position, in response to no position adjustment to be performed.

In an implementation, the task inference module 520 may include a position adjustment determination module. The position adjustment determination module is configured to compare the parameter related to the start position with the parameter related to the destination position, and determine whether the position adjustment is to be performed in the process of the transfer operation based on a comparative result between the parameter related to the start position and the parameter related to the destination position.

In an implementation, the position adjustment determination module is specifically configured to: modify the parameter related to the adjustment position based on the parameter related to the destination position, in the case that the parameter in the transfer task operation instruction includes the parameter related to the adjustment position; and set the parameter related to the adjustment position based on the parameter related to the destination position, in the case that the parameter in the transfer task operation instruction does not include the parameter related to the adjustment position. The task inference module 520 is further configured to delete the parameter related to the adjustment position, and determine the task inference result based on the parameter related to the start position and the parameter related to the destination position, in response to the parameter in the transfer task operation instruction including the parameter related to the adjustment position.

**In** an implementation, the determination module 530 is specifically configured to: perform the task operation based on the task inference result in response to a first picking parameter different from a second picking parameter, by picking a transfer object at the start position with a first picking parameter, transferring the transfer object to the adjustment position; picking the transfer object again at the adjustment position with a second picking parameter, and transferring the transfer object to the destination position.

In an implementation, the control apparatus 500 for the automatic process may further include an execution module. The execution module is configured to perform the multiple atomic operations in series or in parallel during execution of the task operation.

According to another aspect of the present disclosure, an electronic device is provided. FIG. 6 is a schematic block diagram of an electronic device 600 according to an embodiment of the present disclosure. As shown in FIG. 6, the electronic device 600 includes a processor 610 and a memory 620. The memory 620 stores computer program instructions, and the computer program instructions, when executed by the processor 610, implement the control method for the automatic process described above.

According to another aspect of the present disclosure, a storage medium is provided. The storage medium stores program instructions, and the program instructions, when executed, implement the control method for the automatic process described above. The storage medium may include, for example, a storage component of a tablet computer, a hard disk of a personal computer, a read-only memory (ROM), an erasable programmable read-only memory (EPROM), a portable compact disk read-only memory (CD-ROM), a USB memory, or any combination of the above storage media. The computer-readable storage medium may be any combination of one or more computer-readable storage media.

Those skilled in the art can understand the specific implementation schemes and beneficial effects of the control apparatus for the automatic process, the electronic device and the storage medium described above by reading the related description of the control method for the automatic process described above, which are not repeated herein for the sake of brevity.

Although the embodiments have been described herein with reference to the drawings, it should be understood that the above embodiments are merely exemplary and are not intended to limit the scope of the present disclosure. Many changes and modifications may be made by those skilled in the art without departing from the scope and spirit of the present disclosure. All such changes and modifications are deemed to fall into the scope of the claims of the present disclosure.

Those skilled in the art may realize that the units and algorithm steps of each example described in conjunction with the embodiments herein may be implemented by electronic hardware, or a combination of computer software and electronic hardware. Whether these functions are performed in hardware or software depends on the specific application and design constraints of the technical solution. Those skilled in the art may implement the described functionality in various manners for each specific application, while such implementations should not be considered to be beyond the scope of the present disclosure.

It should be understood that the devices and methods disclosed in the embodiments of the present disclosure may be implemented in other manners. For example, the device embodiments described hereinabove are only schematic. For example, the division of the units is only based on logical functions, and there may be other division ways in actual implementation, such as multiple units or components can be combined or integrated into another device, or some features can be neglected or not executed.

In the specification provided herein, a lot of specific details are described. However, it may be appreciated that the embodiments of the present disclosure may be practiced without these specific details. In some instances, well-known methods, structures and techniques are not shown in detail in order to avoid obscuring understanding of the description.

Similarly, it should be understood that in order to simplify the present disclosure and help to understand one or more of the various aspects of the application, in the description of the exemplary embodiments of the present disclosure, the various features of the present disclosure are sometimes grouped together into a single embodiment, figure, or description thereof. However, the method according to the present disclosure should not be interpreted as reflecting the following intention: the claimed application requires more features than those explicitly stated in each claim. More specifically, as reflected in the corresponding claims, the inventive point is that the corresponding technical problem can be solved with features fewer than all the features of a single embodiment being disclosed. Therefore, the claims following the detailed description are hereby expressly incorporated into the detailed description, where each claim itself serves as an independent embodiment of the present disclosure.

It may be understood by those skilled in the art that, except for mutually exclusive features, all features disclosed in this specification (including the claims, abstract and drawings) and all processes or units of any method or apparatus disclosed in this specification can be combined in any way. Unless otherwise expressly stated, each feature disclosed in this specification (including the claims, abstract and drawings) may be replaced by an alternative feature that provides the same, equivalent or similar purpose.

In addition, it may be understood by those skilled in the art that, although some embodiments described herein include certain features included in other embodiments instead of other features, the combination of features of different embodiments is meant to be within the scope of the present disclosure and form different embodiments. For example, in the claims, any one of the claimed embodiments can be used in any combination.

The various component embodiments of the present disclosure may be implemented in hardware, or in software modules running on one or more processors, or in a combination thereof. Those skilled in the art should understand that some or all of the functionality of some modules in the control apparatus for the automatic process according to the embodiments of the present disclosure may be implemented in practice as a microprocessor or a digital signal processor (DSP). The present disclosure may alternatively be implemented as an apparatus or program (such as a computer program and computer program product) for performing part or all of the methods described herein. Such a program implementing the present disclosure may be stored on a computer-readable medium, or may be in the form of one or more signals. Such a signal may be downloaded from an Internet website, or provided on a carrier signal, or provided in any other form.

It should be noted that the above embodiments illustrate rather than limit the present disclosure, and alternative embodiments may be designed by those skilled in the art without departing from the scope of the claims. In the claims, any reference symbol between parentheses shall not be construed as a limitation of the claims. The word "comprising" or " including" does not exclude the presence of elements or steps not listed in the claims. The word "one" or "an" preceding an element does not exclude the presence of a plurality of such elements. The present disclosure may be implemented by means of hardware including several different elements and by means of a suitably programmed computer. In a unit claim enumerating several devices, several of these devices may be embodied by a same hardware item. The use of the words "first", "second", and "third", etc. does not indicate any order. These words may be interpreted as names.

The descriptions hereinabove are merely specific embodiments of the present disclosure or explanations of the specific embodiments. The protection scope of the present disclosure is not limited thereto. Any variations or substitutions made by those skilled in the art within the technical scope disclosed in the present disclosure are deemed to fall into the protection scope of the present disclosure. The protection scope of the present disclosure is based on the protection scope of the claims.

## Claims

1. A control method for an automatic process, comprising:
obtaining a task operation instruction in the automatic process;
performing a task inference on a task operation corresponding to the task operation instruction based on a parameter in the task operation instruction, to obtain a task inference result, wherein the task inference result comprises execution parameters of a plurality of atomic operations in the task operation, and each atomic operation is executed by at least one execution device; and
determining whether to perform the task operation based on the task inference result.

2. The control method according to claim 1, wherein the task operation instruction comprises a transfer task operation instruction, and the transfer task operation instruction comprises a parameter related to a start position of a transfer operation corresponding to the transfer task operation instruction and a parameter related to a destination position of the transfer operation corresponding to the transfer task operation instruction, and
the performing a task inference on a task operation corresponding to the task operation instruction based on a parameter in the task operation instruction, to obtain a task inference result comprises:
obtaining, from the transfer task operation instruction, the parameter related to the start position and the parameter related to the destination position;
determining whether a position adjustment is to be performed in a process of the transfer operation, based on the parameter related to the start position and the parameter related to the destination position;
in response to the position adjustment to be performed, determining a parameter related to the adjustment position based on the parameter related to the destination position, and determining the task inference result based on the parameter related to the start position, the parameter related to the destination position and the parameter related to the adjustment position; and
in response to no position adjustment to be performed, determining the task inference result based on the parameter related to the start position and the parameter related to the destination position.

3. The control method according to claim 2, wherein the determining whether a position adjustment is to be performed in a process of the transfer operation, based on the parameter related to the start position and the parameter related to the destination position comprises:
comparing the parameter related to the start position with the parameter related to the destination position; and
determining whether a position adjustment is to be performed in the process of the transfer operation, based on a comparative result between the parameter related to the start position and the parameter related to the destination position.

4. The control method according to claim 2, wherein the in response to the position adjustment to be performed, determining a parameter related to the adjustment position based on the parameter related to the destination position comprises:
modifying the parameter related to the adjustment position based on the parameter related to the destination position, in a case that the parameter in the transfer task operation instruction comprises the parameter related to the adjustment position; and
setting the parameter related to the adjustment position based on the parameter related to the destination position, in a case that the parameter in the transfer task operation instruction does not comprise the parameter related to the adjustment position;
wherein the in response to no position adjustment to be performed, determining the task inference result based on the parameter related to the start position and the parameter related to the destination position comprises:
deleting the parameter related to the adjustment position, and determining the task inference result based on the parameter related to the start position and the parameter related to the destination position, in response to the parameter in the transfer task operation instruction comprising the parameter related to the adjustment position.

5. The control method according to any one of claims 1 to 4, wherein the task operation instruction comprises a transfer task operation instruction, and the parameter in the transfer task operation instruction comprises one or more of following parameters:
coordinate information on a start position of a transfer operation, coordinate information on a destination position of the transfer operation, a parameter of an operation during transporting in the transfer operation, a gripping height for a transfer object of the transfer operation, or a gripping orientation for the transfer object.

6. The control method according to any one of claims 1 to 4, wherein the plurality of atomic operations in the task operation comprises one or more of the followings:
a movement of a robotic arm served as a transporter, a movement on a guide rail related to a transfer operation, a gripping operation of a gripping jaw of the robotic arm, a releasing operation of the gripping jaw of the robotic arm, a rotation operation of a rotary plate station related to the transfer operation, a code scanning operation of a code scanner related to the transfer operation, a lidding operation of a lid suction device related to the transfer operation, and a delidding operation of the lid suction device related to the transfer operation.

7. The control method according to any one of claims 2 to 4, wherein a transporter for performing the transfer operation is a robotic arm, and the transfer task operation instruction comprises a first picking parameter for a transfer object at a start position of the transfer operation and a second picking parameter for the transfer object at a destination position of the transfer operation, wherein
in response to the first picking parameter different from the second picking parameter, performing the task operation based on the task inference result comprises:
picking the transfer object at the start position with the first picking parameter, and transferring the transfer object to the adjustment position; and
picking the transfer object again at the adjustment position with the second picking parameter, and transferring the transfer object to the destination position.

8. The control method according to any one of claims 1 to 4, further comprising: performing the plurality of atomic operations in series or in parallel in a process of the task operation.

9. A control apparatus for an automatic process, comprising:
an instruction obtaining module configured to obtain a task operation instruction in the automatic process;
a task inference module configured to perform a task inference on a task operation corresponding to the task operation instruction based on a parameter in the task operation instruction, to obtain a task inference result, wherein the task inference result comprises execution parameters of a plurality of atomic operations in the task operation, and each atomic operation is executed by at least one execution device; and
a determination module configured to determine whether to perform the task operation based on the task inference result.

10. An electronic device, comprising a processor and a memory, wherein the memory stores computer program instructions, and the computer program instructions, when executed by the processor, implement the control method for the automatic process according to any one of claims 1 to 8.

11. A storage medium, wherein the storage medium stores program instructions, and the program instructions, when executed, implement the control method for the automatic process according to any one of claims 1 to 8.
